Europäisches Patentamt

European Patent Office

Office européen des brevets

(19)

(11) Numéro de publication : **0 011 000 B2**

(12) **NOUVEAU FASCICULE DE BREVET EUROPÉEN**

(45) Date de publication du nouveau fascicule du brevet : 02.03.88

(51) Int. Cl.⁴ : **B 60 R 19/02**

(21) Numéro de dépôt : 79400683.3

(22) Date de dépôt : 26.09.79

(54) Dispositif de guidage des ailes latérales d'un pare-chocs sur un véhicule automobile.

(30) Priorité : 06.11.78 FR 7831315

(43) Date de publication de la demande : 14.05.80 Bulletin 80/10

(45) Mention de la délivrance du brevet : 24.02.82 Bulletin 82/08

(45) Mention de la décision concernant l'opposition : 02.03.88 Bulletin 88/09

(84) Etats contractants désignés : DE GB IT SE

(56) Documents cités :
DE-A- 2 361 213
DE-B- 2 405 562
FR-A- 2 164 249
FR-A- 2 198 433
FR-A- 2 345 314
Périodique "Automobil Revue", no. 21, du 11.4.1972, pages 43-45
Périodique "Motor week ending", du 10.11.1973, pages 49-55
Prospectus de Daimler-Benz de 1977, des Mercedes 240TD, 300TD, 230T, 250T, 280TE
Le dossier contient des informations techniques présentées postérieurement au dépôt de la demande et ne figurant pas dans le présent fascicule.

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Dossin, Jacques**
**35 Rue Brossolette**
**F-92400 Courbevoie (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention s'applique au guidage des ailes latérales d'un pare-chocs sur un véhicule automobile.

On sait que sur un véhicule automobile, il est avantageux de monter les pare-chocs de façon qu'ils puissent se déplacer longitudinalement sur une certaine course, en absorbant de l'énergie, de façon à éviter la détérioration de la carrosserie, l'agencement étant tel qu'ils reviennent ensuite à leur position d'origine.

Un tel montage est efficace si le choc est dirigé parallèlement à l'axe longitudinal du véhicule. Par contre, si le choc se produit obliquement par rapport à cet axe longitudinal, les parties latérales du pare-chocs peuvent endommager les ailes. C'est pourquoi on a déjà proposé (FR-A-2 198 433, DE-A-2 361 213) des dispositifs de guidage constitués par une pièce d'écartement fixée sur l'aile et coopérant avec une glissière fixée sur la face intérieure des parties latérales du pare-chocs. Malheureusement, ces dispositifs ne remplissent qu'imparfaitement leur fonction car les parties latérales du pare-chocs peuvent pivoter plus ou moins autour de la pièce d'écartement, si bien qu'elles peuvent venir porter sur l'aile et/ou provoquer un coincement contrariant le fonctionnement du pare-chocs, tout au moins son retour à la position initiale.

On connaît également (DE-B-24 05 562) un agencement de pare-chocs télescopique dans lequel il est prévu un cache masquant l'intervalle entre le pare-chocs et la partie adjacente de la structure du véhicule. Ce cache comporte des poches latérales dans lesquelles pénètrent les extrémités latérales du pare-chocs. Cependant, dans cet agencement, le pare-chocs ne comporte pas de parties latérales s'étendant le long des ailes du véhicule parallèlement à l'axe de ce dernier.

Enfin, deux autres documents « AR » n° 21 du 11.5. 1972 et « Motor week ending » du 10.11.1973 montrent des pare-chocs comportant des parties latérales s'étendant parallèlement à l'axe du véhicule et des pièces ou poches latérales portées par les ailes et s'étendant dans le prolongement desdites parties latérales. Cependant, ces deux documents ne s'intéressent qu'au problème des chocs frontaux.

L'invention a pour but de fournir un moyen de guidage particulièrement simple et efficace assurant de plus, sur le plan esthétique, une excellente finition.

En présence du document DE-A-2 361 213, elle a pour objet un dispositif de guidage d'une partie latérale d'un pare-chocs par rapport à une aile de véhicule, ladite partie latérale s'étendant le long de et parallèlement à une partie de l'aile qui est orientée à peu près selon l'axe du véhicule et qui porte le dispositif de guidage caractérisé en ce qu'il est constitué par un boîtier fixé sur l'aile et dans lequel s'engage l'extrémité de la partie latérale du pare-chocs, ce boîtier comportant une paroi latérale, un fond et des rebords de fixation sur l'aile, la paroi latérale et les rebords s'étendant parallèlement à ladite partie de l'aile, la paroi latérale épousant et guidant la partie latérale du pare-chocs dont les bords, dirigés vers l'aile, sont guidés par les rebords du boîtier, un jeu (j) étant prévu entre l'extrémité de la partie latérale du pare-chocs et le fond du boîtier pour permettre le recul du pare-chocs.

Suivant une autre caractéristique :
- le fond du boîtier suit le profil du passage de roue.

Un exemple de réalisation de l'invention fait l'objet de la description qui suit, en référence aux dessins joints dans lesquels :
- la Fig. 1 est une vue partielle en perspective, de la partie avant gauche d'un véhicule ;
- la Fig. 2 est une section suivant un plan horizontal de la partie latérale du pare-chocs ;
- la Fig. 3 est une section verticale suivant la ligne 3-3 de la Fig. 2.

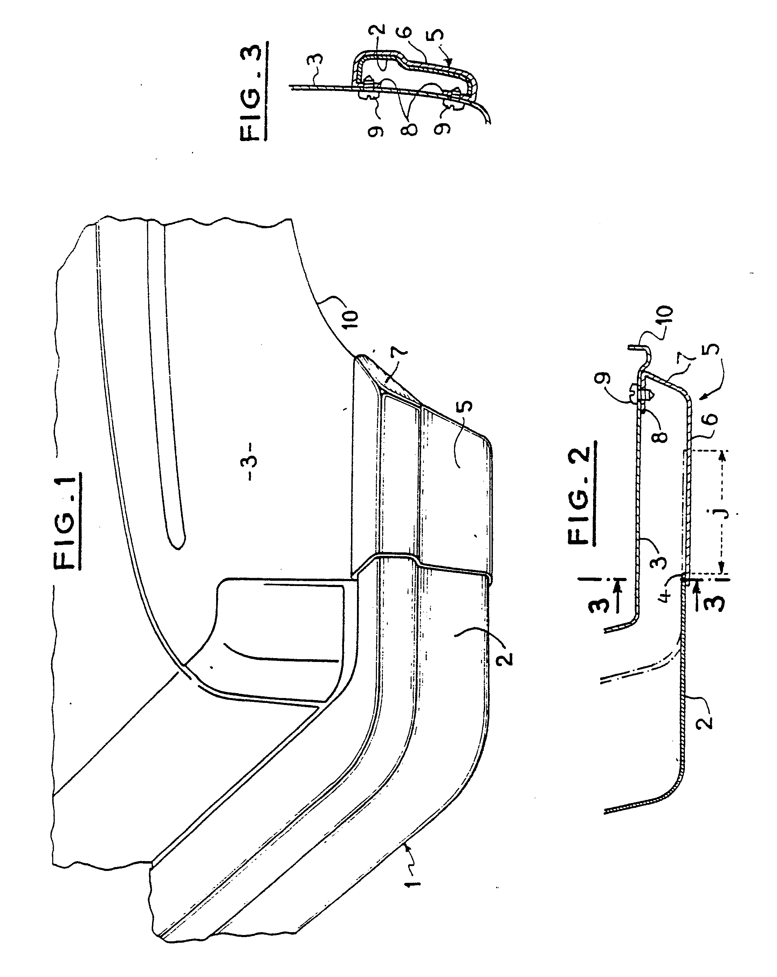

La Fig. 1 représente une partie de véhicule et en particulier l'extrémité d'un pare-chocs avant 1 comportant une partie latérale 2 dirigée vers l'arrière du véhicule, le long de l'aile avant 3.

L'extrémité 4 du pare-chocs s'engage légèrement, en position normale, dans un boîtier 5. Ce boîtier comporte une paroi latérale 6 qui épouse la forme du pare-chocs, un fond 7 vers l'arrière, et des retours 8 permettant sa fixation sur l'aile 3 au moyen de boulons 9.

Un jeu minimal (j) est prévu entre l'extrémité 4 du pare-chocs et le fond 7 du boîtier 5 pour permettre le recul du pare-chocs. Dans ce mouvement, il n'existe aucun risque de coincement ou de détérioration de l'aile 3 puisque le pare-chocs est parfaitement guidé entre la paroi latérale 6 du boîtier 5 et les rebords ou retours 8.

Il est intéressant de noter que les boîtiers 5 permettent un très bonne présentation sur le plan esthétique, le fond 7 pouvant notamment, suivre le profil du passage de roue 10.

D'autre part, le boîtier 5 participe à la protection latérale de l'aile 3.

Il est bien évident que la disposition ci-dessus s'applique de la même façon à un pare-chocs arrière et que le boîtier peut être réalisé en toute matière convenable, métal ou matière plastique.

## Revendications

1. Dispositif de guidage d'une partie latérale (2) d'un pare-chocs (1) par rapport à une aile (3) de véhicule, ladite partie latérale (2) s'étendant le long de et parallèlement à une partie de l'aile qui est orientée à peu près selon l'axe du véhicule et qui porte le dispositif de guidage, caractérisé en ce qu'il est constitué par un boîtier (5) fixé sur l'aile (3) et dans lequel s'engage l'extrémité de la partie latérale (2) du pare-chocs ce boîtier (5) comportant une paroi latérale (6), un fond (7) et des rebords (8) de fixation sur l'aile, la paroi latérale (6) et les rebords (8) s'étendant parallèlement à ladite partie de l'aile la paroi latérale (6) épousant et guidant la partie latérale (2) du pare-chocs dont les bords dirigés vers l'aile (3), sont guidés par les rebords (8) du boîtier, un jeu (j) étant prévu entre l'extrémité (4) de la partie latérale du pare-chocs et le fond du boîtier (5) pour permettre le recul du pare-chocs.

2. Dispositif suivant la revendication 1, caractérisé en ce que le fond (7) du boîtier suit le profil du passage de roue (10).

**Claims**

1. A device for guiding a lateral part (2) of a fender (1) relative to a vehicle wing (3), said lateral part (2) extending along and parallel to a portion of the wing which is oriented substantially along the axis of the vehicle and supports the guiding devices, characterized in that it is constituted by a case (5) fixed to the wing (3) and in which is engages the end (4) of the lateral part (2) of the fender, said case (5) comprising a lateral wall (6), a back-end (7) and flanges (8) for fixation to the wing, the lateral wall (6) conforming to and guiding the lateral part (2) of the fender, the edges of which fender, facing the wing (3), are guided by the flanges (8) of the case, a clearance (j) being provided between the end (4) of the lateral part of the fender and the back-end (7) of the case to (5) allow for the rearward movement of the fender.

2. A device as claimed in claim 1, characterized in that the back-end (7) of the case conforms to the profile of the wheel opening (10) of the wing.

**Patentansprüche**

1. Vorrichtung zur Führung eines seitlichen Teils (2) einer Stoßstange (1) bezüglich eines Fahrzeugkotflügels (3), wobei sich das seitliche Teil (2) längs eines und parallel zu einem Teil des Kotflügels erstreckt, welcher ungefähr in Übereinstimmung mit der Fahrzeugachse ausgerichtet ist und die Führungsvorrichtung trägt, dadurch gekennzeichnet, daß sie durch ein am Kotflügel (3) befestigtes Gehäuse (5) gebildet ist, in welches das Ende des seitlichen Teils (2) der Stoßstange einläuft, wobei das Gehäuse (5) eine seitliche Wand (6), einen Boden (7) und umgebogene Ränder (8) zur Befestigung am Kotflügel umfaßt, wobei sich die seitliche Wand (6) und die umgebogenen Ränder (8) parallel zu dem Teil des Kotflügels erstrecken, wobei die seitliche Wand (6) sich dem seitlichen Teil (2) der Stoßstange anschmiegt und das seitliche Teil (2) der Stoßstange führt, deren zum Kotflügel (3) gerichtete Ränder durch die umgebogenen Ränder (8) des Gehäuses geführt werden, wobei für einen Rückschub der Stoßstange ein Spiel (j) zwischen dem Ende (4) des seitlichen Teils der Stoßstange und dem Boden des Gehäuses (5) vorgesehen ist.

2. Vorrichtung nach Anspruch 1, dadurch gekennzeichnet, daß der Boden (7) des Gehäuses dem Umriß des Radlaufs (10) folgt.

## FIG.1

-3-

10

1

7

5

2

5

## FIG.3

3

9

8

9

2

6

5

## FIG.2

3

9

2

3

8

10

4

7

3

j

6

5

0 011 000